# EUROPÄISCHE PATENTSCHRIFT

(11) **EP 3 921 883 B1**
(45) Veröffentlichungstag und Bekanntmachung des Hinweises auf die Patenterteilung: **15.05.2024**
(21) Anmeldenummer: 20704792.9
(22) Anmeldetag: 03.02.2020
(51) Int. Cl.: H01M 50/24, H01M 50/256, H01M 50/30

(54) **SICHERHEITSBEHÄLTER FÜR GALVANISCHE ZELLEN**
SAFETY CONTAINER FOR GALVANIC CELLS
RÉCIPIENT DE SÉCURITÉ POUR CELLULES GALVANIQUES

(30) Priorität: 04.02.2019 DE 102019201365; 12.07.2019 DE 102019210367
(43) Veröffentlichungstag der Anmeldung: 15.12.2021
(73) Patentinhaber: Volkswagen Aktiengesellschaft, 38440 Wolfsburg (DE)
(72) Erfinder: BIERMANN, Thomas, 44329 Dortmund (DE); KAHKASCHAN, Jasmin, 38448 Wolfsburg (DE)
(74) Vertreter: Zucker, Volker
(86) Internationale Anmeldenummer: PCT/EP2020/052586
(87) Internationale Veröffentlichungsnummer: WO 2020/161060

(56) Entgegenhaltungen:
- DE-A1-102014 110 654
- DE-A1-102014 200 879
- US-A1- 2013 146 603

## Beschreibung

Die Erfindung betrifft einen Sicherheitsbehälter für galvanische Zellen.

Vorliegend werden im Rahmen der Erfindung als galvanische Zelle Vorrichtungen zur spontanen Umwandlung von chemischer in elektrische Energie verstanden, die in drei Gruppen unterteilt werden:
a) Primärzellen, umgangssprachlich auch als Batterie bezeichnet. Kennzeichnend ist, dass die Zelle aufgeladen ist und nur einmalig entladen werden kann. Die Entladung ist irreversibel und die Primärzelle kann elektrisch nicht mehr aufgeladen werden.
b) Sekundärzellen, umgangssprachlich auch als Akkumulator bezeichnet. Nach einer Entladung können Sekundärzellen durch eine gegenüber der Entladung gegenläufige Stromrichtung wieder neu aufgeladen werden. Es kommen im Rahmen der Erfindung insbesondere Lithiumionen-basierte Zellen infrage.
c) Brennstoffzellen, auch als Tertiärzellen bezeichnet. Bei diesen galvanischen Zellen wird der chemische Energieträger von außerhalb kontinuierlich zur Verfügung gestellt. Dies ermöglicht einen kontinuierlichen und im Prinzip zeitlich unbeschränkten Betrieb.

Aus der DE 10 2014 110 654 A1 ist ein gattungsgemäßer Sicherheitsbehälter bekannt, der zum Transport der Zellen dient. Dabei weist der Innenbehälter Abstandshalter auf, um einen Abstand zum Boden und Innenseiten des Außenbehälters einzuhalten, wobei in dem Innenbehälter mindestens ein Aufnahmebehälter zur Aufnahme mindestens einer galvanischen Zelle angeordnet ist, wobei freie Zwischenräume mit einem Brandschutzmittel aus lediglich inertem, nicht-leitfähigem und nicht brennbarem sowie saugfähigem Hohlglasgranulat verfüllt sind. Vorzugsweise besitzt der Außenbehälter mindestens ein Sicherheitsventil, um einen Überdruck zu verhindern. Zusätzlich kann das Sicherheitsventil auf der Innenseite des Außenbehälters durch ein Gittergeflecht, Schaumstoff etc. vor dem Eindringen von Hohlglasgranulat geschützt werden. Der Innenbehälter und der Außenbehälter sind gasdurchlässig verbunden.

Aus der DE 10 2013 222 269 A1 ist eine Aufnahmevorrichtung für eine elektrochemische Energiespeichereinheit bekannt, umfassend einen formstabilen ersten Behälter mit einer Wandung, die einen geschlossenen, jedoch selektiv zugänglichen ersten Innenraum zur Aufnahme der Energiespeichereinheit definiert, erste Isoliermittel, die nicht entflammbar sind und die in einem zwischen der Energiespeichereinheit und der Wandung des ersten Behälters gebildeten ersten Zwischenraum angeordnet sind, sodass diese die Energiespeichereinheit umhüllen. Weiter weist die Aufnahmeeinrichtung einen formstabilen zweiten Behälter mit einer Wandung auf, die einen geschlossenen, jedoch selektiv zugänglichen zweiten Innenraum definiert, in dem der erste Behälter aufgenommen ist. Zwischen dem ersten und zweiten Behälter sind zweite Isoliermittel angeordnet, die den ersten Behälter umhüllen. Weiter sind Gasaustritt-Hemmmittel vorgesehen, die das Austreten von Abgas der Energiespeichereinheit hemmen. Die Wandung des ersten Behälters ist gasdurchlässig ausgebildet. Die Gasaustritt-Hemmmittel weisen eine Kunststoffhülle und eine sperrflüssigkeitsbasierte Siphonanordnung auf, die einen Abgaseingang hat, welcher durch die Kunststoffhülle hindurch mit dem zweiten Zwischenraum fluidverbunden ist. Schließlich ist ein Abgasbehandlungssystem vorgesehen.

Weitere Transportbehälter sind aus der DE 10 2014 200 879 A1 sowie der DE 10 2013 113 880 A1 bekannt.

Aus der US 2013/146603 A1 ist ein Sicherheitsbehälter für galvanische Zellen bekannt, umfassend einen Außenbehälter und mindestens einen Innenbehälter, wobei der Innenbehälter den Aufnahmeraum für die galvanischen Zellen bildet, wobei sich zwischen Außenbehälter und Innenbehälter ein Hohlraum ausbildet, wobei der Hohlraum mit inertem Füllstoff versehen ist. Der Hohlraum ist gasdicht zum Innenbehälter und gasdicht zur äußeren Umgebung des Sicherheitsbehälters ausgebildet.

Der Erfindung liegt das technische Problem zugrunde, einen Sicherheitsbehälter für galvanische Zellen zu verbessern.

Die Lösung des technischen Problems ergibt sich durch einen Sicherheitsbehälter mit den Merkmalen des Anspruchs 1. Weitere vorteilhafte Ausgestaltungen ergeben sich aus den Unteransprüchen.

Hierzu umfasst der Sicherheitsbehälter für galvanische Zellen einen Außenbehälter und mindestens einen Innenbehälter, wobei der Innenbehälter den Aufnahmeraum für die galvanischen Zellen bildet. Innen- und Außenbehälter sind derart zueinander ausgerichtet, dass sich zwischen diesen ein Hohlraum ausbildet. Dabei sind sowohl der Innenbehälter als auch der Hohlraum zwischen Innenbehälter und Außenbehälter mit inertem Füllstoff versehen. Dabei kann der gleiche Füllstoff verwendet werden, es können aber auch unterschiedliche Füllstoffe zur Anwendung kommen. Vorzugsweise sind die Füllstoffe zusätzlich nicht brennbar und elektrisch nicht leitfähig. Der Hohlraum ist dabei gasdicht zum Innenbehälter und gasdicht zur äußeren Umgebung des Sicherheitsbehälters ausgebildet, wobei der Innenbehälter über mindestens ein Rohr durch den Hohlraum mit der äußeren Umgebung verbunden ist, wobei am äußeren Ende des Rohres ein Druckventil und/oder ein Anschluss an eine Abluftanlage angeordnet ist. Somit kann ein Überdruck im Innenbehälter abgebaut werden, ohne dass Sauerstoff von außen eindringen kann. Durch die gasdichte Ausbildung des Hohlraums gegenüber dem Innenraum wird verhindert, dass eventuell im Innenraum entstehende Gase in den Hohlraum auf die Innenseite des Außenbehälters strömen können, was zu einer unerwünschten Erwärmung des Außenbehälters führen könnte. Die primäre Aufgabe des Hohlraums mit dem Füllstoff ist daher die Wärmeisolation bzw. Wärmeabschirmung. Des Weiteren wird die Innenseite des Außenbehälters sowie die Außenseite des Innenbehälters auch nicht durch irgendwelche Substanzen chemisch angegriffen. Die Anzahl der Rohre wird dabei vorzugsweise in Abhängigkeit der Größe des Innenbehälters gewählt.

Erfindungsgemäß sind Teile des Innenbehälters fest mit dem Außenbehälter verbunden. Bei einer Ausführungsform aus Stahl sind diese vorzugsweise verschweißt. Vorzugsweise sind mit Ausnahme des gemeinsamen Deckels alle Teile des Innen- und Außenbehälters fest verbunden. Dies vereinfacht die gasdichte Ausbildung des Hohlraums und sorgt für eine größere Stabilität.

Mittels des erfindungsgemäßen Sicherheitsbehälters können galvanische Zellen gefahrlos transportiert, gelagert oder betrieben werden. Der Sicherheitsbehälter kann sowohl in Gebäuden oder im Freien eingesetzt werden und kann sowohl stationär als auch mobil eingesetzt werden. Insbesondere bei Anwendungen in Gebäuden wird das äußere Ende des Rohres an eine aktive oder passive Abluftanlage angeschlossen, um so die Raumluft zu schützen.

In einer Ausführungsform sind der Außenbehälter und der Innenbehälter aus Stahl, insbesondere Edelstahl, ausgebildet.

In einer weiteren Ausführungsform weisen der Außenbehälter und der Innenbehälter einen gemeinsamen lösbaren Deckel auf, der vorzugsweise verschraubbar ist. Hierdurch wird der Vorgang des Beladens und Entladens der galvanischen Zellen in den Sicherheitsbehälter vereinfacht. Weiter vorzugsweise ist der Deckel doppelwandig ausgebildet, wobei weiter vorzugsweise zwischen den Wänden des Deckels Füllstoff ist.

In einer weiteren Ausführungsform ist der Füllstoff als Silikat ausgebildet, vorzugsweise als Blähglas oder Glaswolle oder Steinwolle. Das Blähglas ist vorzugsweise als loses Hohlglasgranulat ausgebildet und weist weiter vorzugsweise einen mittleren Durchmesser zwischen 0,1 mm bis 10 mm, weiter vorzugsweise zwischen 0,1 mm und 5 mm auf. Der Füllstoff weist vorzugsweise einen Schmelzpunkt von größer 900 °C, weiter vorzugsweise größer 1.000 °C auf.

In einer weiteren Ausführungsform sind am inneren Ende des Rohres Mittel vorgesehen, die ein Eindringen von Füllstoff in das Rohr verhindern. Die Mittel können beispielsweise als Flies oder als Filter ausgebildet sein. Vorzugsweise bestehen Flies oder Sieb aus einem hochtemperaturbeständigen Material mit einem Schmelzpunkt im Bereich der Füllstoffe. Für das Sieb wird vorzugsweise Kunststoff oder Metall als Material verwendet. Zum Schutz des Siebes kann weiter ein Trittschutz vorgesehen sein, um das Sieb vor Beschädigung zu schützen.

In einer weiteren Ausführungsform beträgt die Breite des Hohlraums zwischen der Außenseite des Innenbehälters und der Innenseite des Außenbehälters vollumfänglich mindestens 0,1 m, weiter vorzugsweise mindestens 0,2 m.

Sollen die galvanischen Zellen im Sicherheitsbehälter elektrisch betrieben werden, so weisen der Außenbehälter und der Innenbehälter jeweils gasdichte Durchführungen für Lastkabel und/oder Datenleitungen auf. Dabei können die Zellen beispielsweise als Batteriemodule oder Batterieeinheiten ausgebildet sein, die jeweils noch eigene Gehäuse aufweisen. Ist die elektrische Last nicht auch im Sicherheitsbehälter angeordnet, so müssen von den Batteriepolen Lastkabel gasdicht durch den Sicherheitsbehälter nach draußen geführt werden. Gleiches gilt für Datenleitungen, um beispielsweise Daten von Spannungs- und/oder Temperatursensoren der Zellen nach draußen zu übertragen oder Steuerbefehle zu Steuereinheiten innerhalb des Sicherheitsbehälters zu übertragen. Dabei sind Ausführungen möglich, wo Lastkabel und Datenkabel durch eine gemeinsame Durchführung geführt sind. Dies ist bevorzugt, wenn die Ströme auf dem Lastkabel nicht so groß sind. Ist der Strom auf den Lastkabeln hingegen beispielsweise größer als 1 A, so werden bevorzugt Last- und Datenkabel getrennt geführt, sodass die Datenkabel nicht durch die Magnetfelder der Ladekabel gestört werden.

In einer weiteren Ausführungsform weisen der Außenbehälter und der Innenbehälter jeweils gasdichte Durchführungen für Kühlmittelleitungen auf. Dabei können die Kühlmittelleitungen beispielsweise Gase oder Flüssigkeiten transportieren. Dabei kann die Kühlung auf den Raum des Innenbehälters beschränkt sein. Die Kühlleitungen können aber auch an eine Kühleinrichtung innerhalb der Batteriemodule oder Batterieeinheit angeschlossen werden.

Die Erfindung wird nachfolgend anhand eines bevorzugten Ausführungsbeispiels näher erläutert. Die Figuren zeigen:
- Fig. 1: eine schematische Draufsicht auf den Sicherheitsbehälter ohne Deckel,
- Fig. 2: eine schematische Seitenansicht,

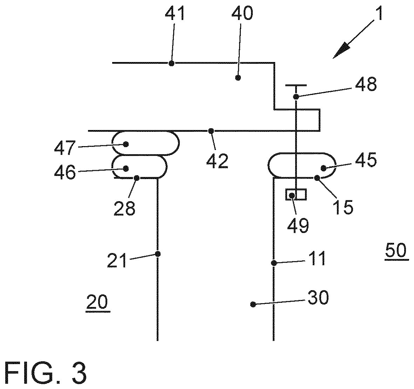

- Fig. 3: eine schematische Detaildarstellung der Verbindung zwischen Deckel und Seitenwänden und
- Fig. 4: eine schematische Draufsicht auf einen Sicherheitsbehälter ohne Deckel in einer zweiten Ausführungsform.

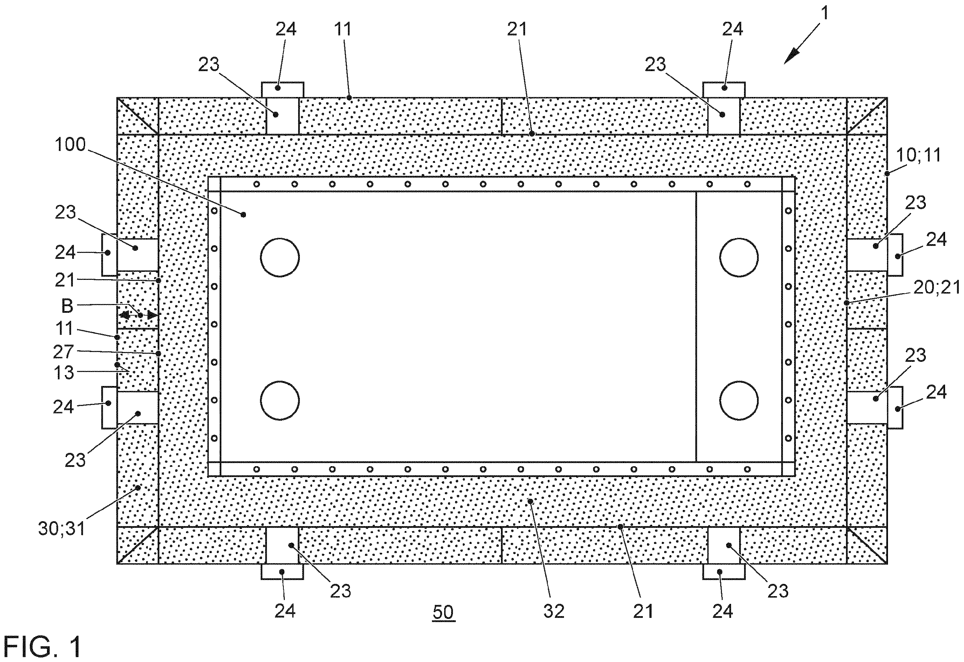

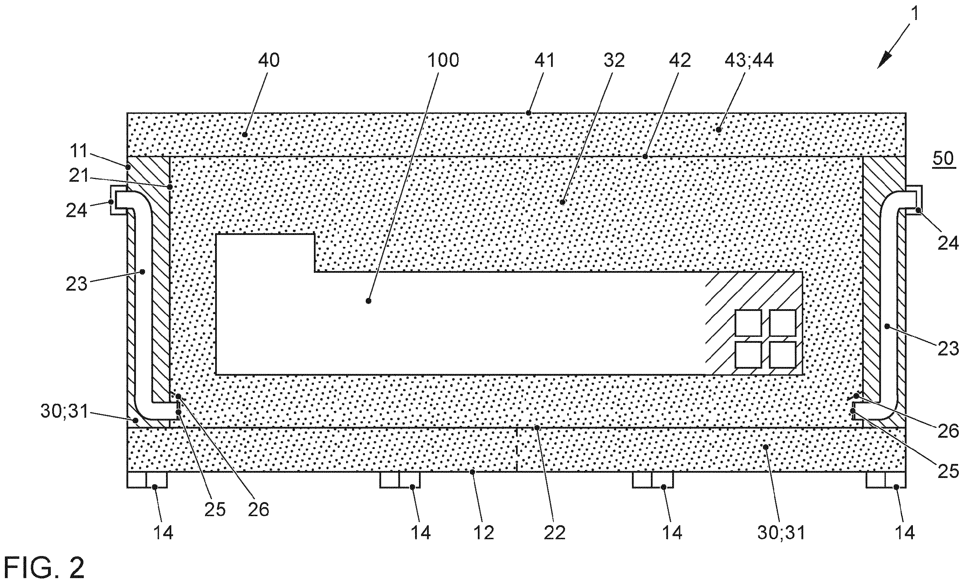

In der Fig. 1 ist eine schematische Draufsicht auf einen Sicherheitsbehälter 1 zum Transport für galvanische Zellen 100 dargestellt. Der Sicherheitsbehälter 1 weist einen Außenbehälter 10 auf, der vier Seitenwände 11 und einen Boden 12 (siehe Fig. 2) aufweist. Weiter weist der Sicherheitsbehälter 1 einen Innenbehälter 20 auf, der vier Seitenwände 21 und einen Boden 22 (siehe Fig. 2) aufweist. Im Innenbehälter 20 sind die galvanischen Zellen 100 angeordnet. Zwischen Innenbehälter 20 und Außenbehälter 10 ist ein Hohlraum 30 ausgebildet. Dieser Hohlraum 30 ist mit inertem Füllstoff 31 aufgefüllt, der weiter vorzugsweise nicht brennbar und elektrisch nicht leitend ist. Vorzugsweise ist der Füllstoff Blähglas, insbesondere loses Hohlglasgranulat. Der Innenbehälter 20 ist ebenfalls mit inertem Füllstoff 32 aufgefüllt, sodass dieser die galvanischen Zellen 100 bedeckt. Der Hohlraum 30 ist gasdicht zum Innenbehälter 20 und gasdicht zur äußeren Umgebung 50 des Sicherheitsbehälters 1 ausgebildet. Der Innenbehälter 20 ist über mehrere Rohre 23 durch den Hohlraum 30 mit der äußeren Umgebung 50 verbunden, wobei am äußeren Ende der Rohre 23 Druckventile 24 angeordnet sind. Die Rohre 23 sind beispielsweise DN50-Rohre. Am inneren Ende des Rohres 23 ist jeweils ein Sieb 25 und ein Trittschutz 26 angeordnet. Der Außenbehälter 10 und der Innenbehälter 20 sind vorzugsweise aus Edelstahl und fest miteinander verbunden, vorzugsweise verschweißt. Die Breite B des Hohlraums 30 zwischen der Außenseite 27 des Innenbehälters 20 und der Innenseite 13 des Außenbehälters 10 ist vorzugsweise mindestens 0,1 m, weiter vorzugsweise 0,2 m.

Innenbehälter 20 und Außenbehälter 10 sind durch einen gemeinsamen Deckel 40 nach oben abgeschlossen (siehe Fig. 2). Am Boden 12 des Außenbehälters 10 sind Füße 14 angeordnet, die vorzugsweise einen Einfuhrschacht für einen Gabelstapler bilden. Der Deckel 40 ist doppelwandig ausgebildet und weist eine Außenseite 41 und eine Innenseite 42 auf, zwischen denen sich ein Hohlraum 43 ausbildet, der mit inertem Füllstoff 44 aufgefüllt ist. Vorzugsweise wird für die Füllstoffe 31, 32 und 44 gleiches Material verwendet, was aber nicht zwingend ist.

Der Deckel 40 ist mit dem Außenbehälter 10 verschraubt. Hierzu weisen die Seitenwände 11 einen Vorsprung 15 auf, wobei zwischen Deckel 40 und Vorsprung 15 eine erste Dichtung 45 angeordnet ist. Die Seitenwände 21 des Innenbehälters 20 weisen ebenfalls einen Vorsprung 28 auf, auf dem eine zweite Dichtung 46 aufliegt, wobei gegenüberliegend im Deckel 40 eine dritte Dichtung 47 angeordnet ist. Mittels Schrauben 48 und Muttern 49 wird dann der Deckel 40 an mehreren Stellen verschraubt, sodass der Deckel 40 die Dichtungen 45-47 zusammenpresst. Hierdurch wird der Hohlraum 30 gasdicht gegen die äußere Umgebung 50 sowie gegen den Innenbehälter 20 abgedichtet. Anstelle der zwei Dichtungen 46, 47 an der Seitenwand 21 kann auch nur eine einzige Dichtung verwendet werden. Ist die Seitenwand 21 ausreichend breit, kann auf den Vorsprung 28 verzichtet werden.

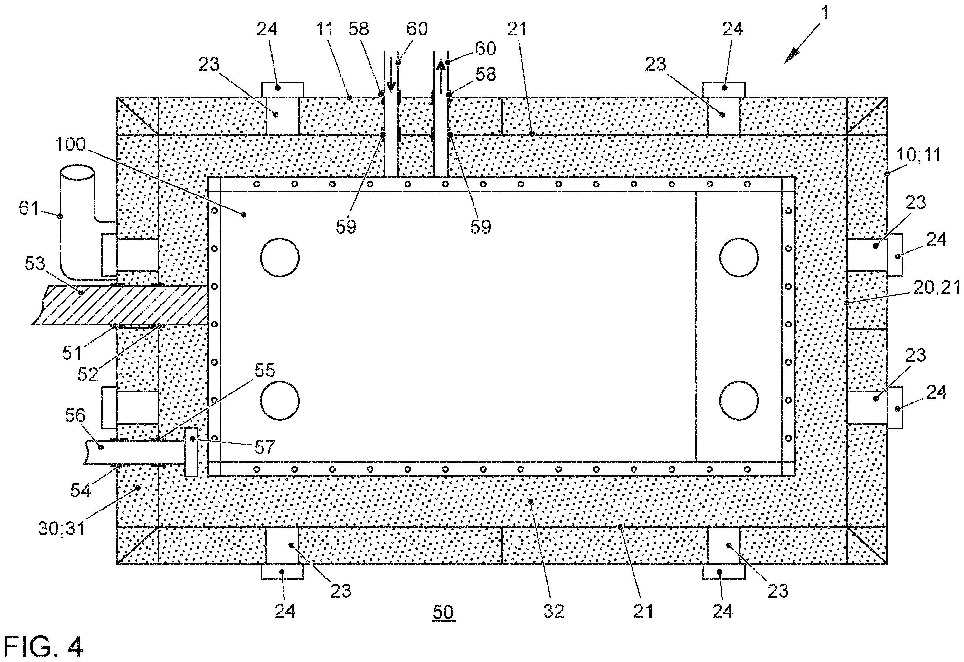

In der Fig. 4 ist eine alternative Ausführungsform des Sicherheitsbehälters 1 dargestellt, der zum Einsatz kommt, wenn die galvanischen Zellen 100 elektrisch betrieben werden. Hierzu weisen der Außenbehälter 10 und der Innenbehälter 20 jeweils gasdichte Durchführungen 51, 52 für Lastkabel 53 auf, die dann an entsprechende Anschlüsse (z. B. Polklemmen) der galvanischen Zellen 100 angeschlossen werden. Weiter weisen der Außenbehälter 10 und der Innenbehälter 20 jeweils gasdichte Durchführungen 54, 55 für Datenleitungen 56 auf, die beispielsweise durch einen entsprechenden Verbinder 57 zusammengefasst sind und mit einem nicht dargestellten Gegenverbinder mit Elektronikeinheiten wie Sensoriken und Steuereinheiten der Zellen 100 verbindbar sind. Weiter weist der Sicherheitsbehälter 1 im Außenbehälter 10 und Innenbehälter 20 gasdichte Durchführungen 58, 59 für Kühlmittelleitungen 60 auf, so dass die Zellen 100 während des Betriebes gekühlt werden können. Schließlich weist der Sicherheitsbehälter 1 an den Druckventilen 24 Anschlüsse 61 für eine Abluftanlage auf, wobei aus Übersichtsgründen nur ein Anschluss 61 links oben dargestellt ist. An dem Anschluss 61 kann dann ein Schlauch oder Rohr befestigt werden, um die im Innenbehälter 20 entstehenden Gase abzuführen.

Mittels des Sicherheitsbehälters 1 kann somit eine Batterieeinheit mit einer Vielzahl von Zellen 100 betrieben werden, wobei aufgrund des Sicherheitsbehälters 1 die Brandgefahr oder das Austreten schädlicher Substanzen im Schadensfall wirksam verhindert wird. Somit können nun auch größere Batterieeinheiten an Stellen eingesetzt werden, wo besonders hohe Anforderungen an den Brandschutz gestellt werden.

### Bezugszeichenliste

- 1: Sicherheitsbehälter
- 10: Außenbehälter
- 11: Seitenwand
- 12: Boden
- 13: Innenseite
- 14: Füße
- 15: Vorsprung
- 20: Innenbehälter
- 21: Seitenwand
- 22: Boden
- 23: Rohr
- 24: Druckventil
- 25: Sieb
- 26: Trittschutz
- 27: Außenseite
- 28: Vorsprung
- 30: Hohlraum
- 31: Füllstoff
- 32: Füllstoff
- 40: Deckel
- 41: Außenseite
- 42: Innenseite
- 43: Hohlraum
- 44: Füllstoff
- 45: Dichtung
- 46: Dichtung
- 47: Dichtung
- 48: Schraube
- 49: Mutter
- 50: äußere Umgebung
- 51: gasdichte Durchführung Außenbehälter
- 52: gasdichte Durchführung Innenbehälter
- 53: Lastkabel
- 54: gasdichte Durchführung Außenbehälter
- 55: gasdichte Durchführung Innenbehälter
- 56: Datenleitung
- 57: Verbinder
- 58: gasdichte Durchführung Außenbehälter
- 59: gasdichte Durchführung Innenbehälter
- 60: Kühlmittelleitung
- 61: Anschluss
- 100: galvanische Zellen
- B: Breite

## Patentansprüche

1. Sicherheitsbehälter (1) für galvanische Zellen (100), umfassend einen Außenbehälter (10) und mindestens einen Innenbehälter (20), wobei der Innenbehälter (20) den Aufnahmeraum für die galvanischen Zellen (100) bildet, wobei zwischen Innenbehälter (20) und Außenbehälter (10) sich ein Hohlraum (30) ausbildet, wobei der Innenbehälter (20) und der Hohlraum (30) zwischen Innenbehälter (20) und Außenbehälter (10) mit inertem Füllstoff (31, 32) versehen sind, wobei
der Hohlraum (30) gasdicht zum Innenbehälter (20) und gasdicht zur äußeren Umgebung (50) des Sicherheitsbehälters (1) ausgebildet ist, wobei der Innenbehälter (20) über mindestens ein Rohr (23) durch den Hohlraum (30) mit der äußeren Umgebung (50) verbunden ist, wobei am äußeren Ende des Rohres (23) ein Druckventil (24) und/oder ein Anschluss (61) an eine Abluftanlage angeordnet ist, wobei
Teile des Innenbehälters (20) fest mit dem Außenbehälter (10) verbunden sind.

2. Sicherheitsbehälter nach Anspruch 1, **dadurch gekennzeichnet, dass** der Außenbehälter (10) und der Innenbehälter (20) aus Stahl sind.

3. Sicherheitsbehälter nach Anspruch 1 oder 2, **dadurch gekennzeichnet, dass** der Außenbehälter (10) und der Innenbehälter (20) einen gemeinsamen lösbaren Deckel (40) aufweisen.

4. Sicherheitsbehälter nach Anspruch 3, **dadurch gekennzeichnet, dass** der Deckel (40) doppelwandig ausgebildet ist, wobei in dem Hohlraum (43) inerter Füllstoff (44) ist.

5. Sicherheitsbehälter nach einem der vorangegangenen Ansprüche, **dadurch gekennzeichnet, dass** der Füllstoff (31, 32, 44) als Silikat ausgebildet ist.

6. Sicherheitsbehälter nach einem der vorangegangenen Ansprüche, **dadurch gekennzeichnet, dass** am inneren Ende des Rohres (23) ein Sieb (25) angeordnet ist.

7. Sicherheitsbehälter nach einem der vorangegangenen Ansprüche, **dadurch gekennzeichnet, dass** die Breite (B) des Hohlraums (30) zwischen der Außenseite (27) des Innenbehälters (20) und der Innenseite (13) des Außenbehälters (10) vollumfänglich mindestens 0,1 m beträgt.

8. Sicherheitsbehälter nach einem der vorangegangenen Ansprüche, **dadurch gekennzeichnet, dass** der Außenbehälter (10) und der Innenbehälter (20) jeweils gasdichte Durchführungen (51, 52; 54, 55) für Lastkabel (53) und/oder Datenleitungen (56) aufweisen.

9. Sicherheitsbehälter nach einem der vorangegangenen Ansprüche, **dadurch gekennzeichnet, dass** der Außenbehälter (10) und der Innenbehälter (20) jeweils gasdichte Durchführungen (58, 59) für Kühlmittelleitungen (60) aufweisen.

## Claims

1. Safety container (1) for galvanic cells (100), comprising an external container (10) and at least one internal container (20), wherein the internal container (20) forms the receptacle space for the galvanic cells (100), wherein a cavity (30) is formed between the internal container (20) and the external container (10), wherein the internal container (20) and the cavity (30) between the internal container (20) and the external container (10) are provided with an inert filler material (31, 32), wherein
the cavity (30) is configured so as to be gas-tight in relation to the internal container (20) and gas-tight in relation to the outer environment (50) of the safety container (1), wherein the internal container (20) is connected to the outer environment (50) by way of at least one tube (23) running through the cavity (30), wherein a pressure valve (24) and/or a connector (61) to an exhaust air system is disposed on the outer end of the tube (23), wherein parts of the internal container (20) are fixedly connected to the external container (10).

2. Safety container according to Claim 1, **characterized in that** the external container (10) and the internal container (20) are made of steel.

3. Safety container according to Claim 1 or 2, **characterized in that** the external container (10) and the internal container (20) have a common releasable lid (40).

4. Safety container according to Claim 3, **characterized in that** the lid (30) is configured with a double wall, wherein an inert filler material (44) is in the cavity (43).

5. Safety container according to one of the preceding claims, **characterized in that** the filler material (31, 32, 44) is configured as silicate.

6. Safety container according to one of the preceding claims, **characterized in that** a screen (25) is disposed on the inner end of the tube (23).

7. Safety container according to one of the preceding claims, **characterized in that** the width (B) of the cavity (30) between the external side (27) of the internal container (20) and the internal side (13) of the external container (10) is at least 0.1 m about the entire circumference.

8. Safety container according to one of the preceding claims, **characterized in that** the external container (10) and the internal container (20) each have gas-tight feedthroughs (51, 52; 54, 55) for load cables (53) and/or data lines (56).

9. Safety container according to one of the preceding claims, **characterized in that** the external container (10) and the internal container (20) each have gas-tight feedthroughs (58, 59) for coolant lines (60).

## Revendications

1. Récipient de sécurité (1) pour cellules galvaniques (100), comprenant un récipient extérieur (10) et au moins un récipient intérieur (20), le récipient intérieur (20) formant l'espace de réception pour les cellules galvaniques (100), une cavité (30) se formant entre le récipient intérieur (20) et le récipient extérieur (10), le récipient intérieur (20) et la cavité (30) entre le récipient intérieur (20) et le récipient extérieur (10) étant pourvus d'une matière de remplissage inerte (31, 32),
la cavité (30) étant réalisée sous forme étanche aux gaz par rapport au récipient intérieur (20) et sous forme étanche aux gaz par rapport à l'environnement extérieur (50) du récipient de sécurité (1), le récipient intérieur (20) étant relié à l'environnement extérieur (50) par le biais d'au moins un tube (23) à travers la cavité (30), une soupape de pression (24) et/ou un raccord (61) à une installation d'évacuation d'air étant agencés à l'extrémité extérieure du tube (23),
des parties du récipient intérieur (20) étant reliées de manière fixe au récipient extérieur (10).

2. Récipient de sécurité selon la revendication 1, **caractérisé en ce que** le récipient extérieur (10) et le récipient intérieur (20) sont en acier.

3. Récipient de sécurité selon la revendication 1 ou 2, **caractérisé en ce que** le récipient extérieur (10) et le récipient intérieur (20) présentent un couvercle commun amovible (40) .

4. Récipient de sécurité selon la revendication 3, **caractérisé en ce que** le couvercle (40) est réalisé à double paroi, une matière de remplissage inerte (44) étant dans la cavité (43).

5. Récipient de sécurité selon l'une quelconque des revendications précédentes, **caractérisé en ce que** la matière de remplissage (31, 32, 44) est réalisée sous forme de silicate.

6. Récipient de sécurité selon l'une quelconque des revendications précédentes, **caractérisé en ce qu'**un tamis (25) est agencé à l'extrémité intérieure du tube (23).

7. Récipient de sécurité selon l'une quelconque des revendications précédentes, **caractérisé en ce que** la largeur (B) de la cavité (30) entre le côté extérieur (27) du récipient intérieur (20) et le côté intérieur (13) du récipient extérieur (10) est d'au moins 0,1 m dans son intégralité.

8. Récipient de sécurité selon l'une quelconque des revendications précédentes, **caractérisée en ce que** le récipient extérieur (10) et le récipient intérieur (20) présentent chacun des passages étanches aux gaz (51, 52 ; 54, 55) pour des câbles de charge (53) et/ou des lignes de données (56).

9. Récipient de sécurité selon l'une quelconque des revendications précédentes, **caractérisée en ce que** le récipient extérieur (10) et le récipient intérieur (20) présentent chacun des passages étanches aux gaz (58, 59) pour des conduites de réfrigérant (60).
